Europäisches Patentamt

European Patent Office

Office européen des brevets

(11) Veröffentlichungsnummer: **0 348 739**
**A1**

(12) **EUROPÄISCHE PATENTANMELDUNG**

(21) Anmeldenummer: 89110811.0

(22) Anmeldetag: 14.06.89

(51) Int. Cl.⁴: **G01N 27/90**

(30) Priorität: 29.06.88 DE 8808320 U

(43) Veröffentlichungstag der Anmeldung:
03.01.90 Patentblatt 90/01

(84) Benannte Vertragsstaaten:
**BE CH DE ES LI NL**

(71) Anmelder: **Siemens Aktiengesellschaft**
**Wittelsbacherplatz 2**
**D-8000 München 2(DE)**

(72) Erfinder: **Kutscher, Anton**
**Ungarnstrasse 1**
**D-8520 Erlangen(DE)**

(54) **Sonde zur Prüfung von Rohren, insbesondere von U-Rohren eines Wärmetauschers.**

㊗ Ein Prüfkopf (1) ist mit einem biegeelastischen Schubschlauch (3) verbunden, in dessen Innerem elektrische Leitungen (9, 10, 11) angeordnet sind. Zur Verminderung der Knick- und Druckanfälligkeit ist das Innere der äußeren Hülle (3a) des Schubschlauches (3) mit gummielastischem, die elektrischen Leitungen (9, 10, 11) umgebenden Füllmaterial (12) ausgefüllt.

FIG 1

EP 0 348 739 A1

## Sonde zur Prüfung von Rohren, insbesondere U-Rohren eines Wärmetauschers

Die Erfindung bezieht sich auf eine Sonde zur Prüfung von Rohren eines Wärmetauschers, der beispielsweise als Dampferzeuger mit einem U-Rohrbündel ausgebildet ist.

Zur zerstörungsfreien Prüfung von Rohren dienen Sonden, bei denen ein Prüfkopf mit einem biegeelastischen Schubschlauch verbunden ist, der mittels einer Schubvorrichtung in das zu prüfende Rohr des Wärmetauschers eingeschoben wird. Vom Prüfkopf führen elektrische Leitungen lose durch den Schubschlauch nach außen zu einer Meßvorrichtung. Da der Schubschlauch biegeelastisch ausgebildet ist, ist er druck- und knickanfällig und kann dadurch vorzeitig unbrauchbar werden.

Der Erfindung liegt die Aufgabe zugrunde, bei einer Sonde die Knick- und Druckanfälligkeit des Schubschlauches herabzusetzen und damit die Lebensdauer der Sonde insgesamt zu erhöhen.

Diese Aufgabe wird durch eine Sonde zur Prüfung von Rohren, insbesondere U-Rohren eines Wärmetauschers gelöst, bei der ein Prüfkopf mit einem biegeelastischen Schubschlauch verbunden ist, der aus einer äußeren Hülle gebildet ist, in dessen Innerem elektrische Leitungen angeordnet sind, wobei das Innere der Hülle mit gummielastischem, die elektrischen Leitungen umgebenden Füllmaterial ausgefüllt ist.

Auf diese Weise wird die Druckanfälligkeit und damit die Knickanfälligkeit des Schubschlauches erheblich herabgesetzt. Einer geknickten Stelle kann durch Geradebiegen leicht wieder die ursprüngliche Form gegeben werden, die dann auch beibehalten wird. Gegenüber einem hohlen Schubschlauch kann weicheres Material verwendet werden, so daß die Sonde leichter durch U-förmig gebogene Rohre hindurchgeführt werden kann.

Es ist günstig, die äußere Hülle des Schubschlauches aus Polyamid und das Füllmaterial aus Weich-Polyvinilchlorid herzustellen.

Besonders vorteilhaft ist es, wenn die äußere Hülle durch Polyamid aus "11-Amino-Undecansäure" (PA 11) gebildet ist.

Nach einer anderen Ausführung kann die äußere Hülle durch "Polyamid aus Laurinlactam" (PA 12) gebildet sein.

Der Anschluß des Schubschlauches an den Prüfkopf kann dadurch erheblich vereinfacht werden, daß elektrische Leitungsenden des Prüfkopfes durch eine zentrale Aussparung des Prüfkopfes hindurchgeführt und am freien Ende des Prüfkopfes mit elektrischen Leitungsenden des Prüfkopfes verbunden werden. Die Verbindungsstelle braucht dann nur durch eine Kappe abgedeckt zu werden, die zugleich als Führungsspitze dient.

Die Erfindung wird anhand der Zeichnung näher erläutert. Es zeigen:

FIG 1 einen Längsschnitt einer Sonde und

FIG 2 einen Querschnitt des Schubschlauches der Sonde gemäß FIG 1.

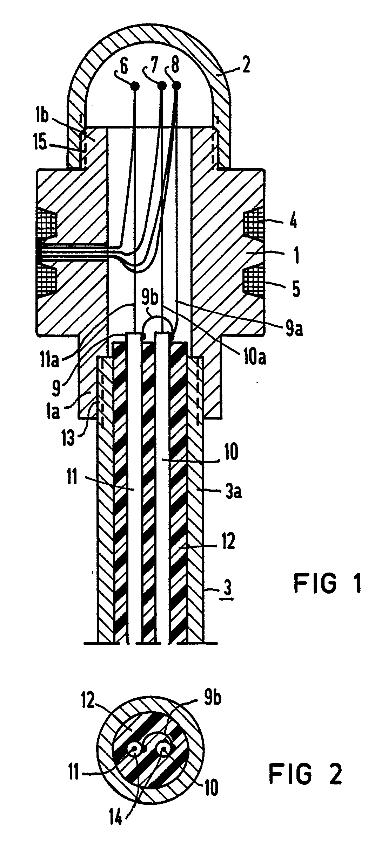

Die in FIG 1 gezeigte Sonde besitzt einen Prüfkopf 1, der aus einem ringförmigen Spulenträger gebildet ist. Dieser Spulenkörper hat eine zentrische Aussparung, an deren einen Seite ein hülsenartiger Ansatz 1a zum Einführen und Befestigen eines Schubschlauches angeordnet ist. An der anderen Seite der Öffnung (Stirnseite) hat der Spulenkörper einen Ansatz 1b zum Anbringen einer als Führungsspitze dienenden Kappe 2. Mittels des Schubschlauches 3 wird die Sonde mit Hilfe einer an sich bekannten Schubvorrichtung in ein Rohr eines Wärmetauschers eingeschoben.

Der Prüfkopf ist koaxial angeordneten mit Spulen 4, 5 für die Durchführung einer Wirbelstromprüfung versehen. Die Enden der elektrischen Leitungen dieser Spulen 4, 5 sind in das Innere des mit der zentralen Aussparung versehenen Prüfkopfes und von dort zu den Enden 9a, 10a, 11a von elektrischen Leitungen 9, 10, 11 geführt, die innerhalb der Hülle 3a des Schubschlauches 3 untergebracht sind und zu einer nicht dargestellten Meßeinrichtung außerhalb des Schubschlauches führen. Das Innere der Hülle 3a des Schubschlauches 3 ist mit gummielastischem, die elektrischen Leitungen 9, 10, 11 umgegebenden Füllmaterial 12 ausgefüllt (siehe auch FIG 2).

Die äußere Hülle 3a des Schubschlauches 3 ist vorzugsweise aus Polyamid, insbesondere wärmebeständigen Polyamid, dessen Elastizitätsmodul aus dem Biegeversuch zwischen $1 \cdot 10^3$ bis $1,5 \cdot 10^3 \, N/mm^2$ und aus dem Zugversuch zwischen $8 \cdot 10^2$ bis $1,6 \cdot 10^3 \, N/mm^2$ liegt.

Beispiel 1: Die äußere Hülle 3a des Schubschlauches ist durch Polyamid aus 11-Amino-Undecansäure (PA 11) gebildet.

Beispiel 2: Die äußere Hülle 3a ist durch Polyamid aus Laurinlactam = 1,12-Dodekanlactam (PA 12) gebildet.

Das Füllmaterial 12 besteht aus einem gummielastischen Weich-PVC.

Es ist günstig, Maßnahmen zu treffen, daß das Füllmaterial bei der Herstellung der Hülle 3a des Schubschlauches an der äußeren Hülle haftet.

Zweckmäßigerweise sind die elektrischen Leitungen 9, 10, 11 als Koaxialkabel ausgebildet, wobei die leitungen 10, 11 jeweils den von einer Teflonumhüllung 14 umgebenen zentralen Leiter und die Leitungen 9 jeweils das die Teflonumhüllung umgebende Leiterflechtwerk bilden. Die Leiterflechtwerke sind durch einen Leiter 9b miteinander verbunden und zu dem Leiterende 9a geführt.

Der mit Spulen 4, 5 versehene Prüfkopf 1 trägt einen Ansatz mit Gewinde 13. Nach dem Ab isolieren der als Koaxialkabel ausgebildeten Leitungen 10, 11 wird der Prüfkopf 1 unter Zwischengabe eines Klebers auf das Gewinde 13 aufgeschraubt, wobei die Leitungsenden 9a, 10a, 11a durch die zentrale Aussparung des Prüfkopfes 1 hindurchgeführt sind. Am freien Ende des Prüfkopfes 1 (Stirnseite) können sie mit den Enden der Leitungen der Spulen 4, 5 in einfacher Weise, beispielsweise durch Löten, verbunden werden. Die Verbindungsstellen 6, 7, 8 werden mittels der als Führungsspitze dienenden Kappe 2 abgedeckt, die mit einem Innengewinde 15 versehen und auf den Prüfkopf 1 in einfacher Weise aufgeschraubt werden kann.

## Ansprüche

1. Sonde zur Prüfung von Rohren, insbesondere U-Rohren, eines Wärmetauschers, bei der ein Prüfkopf (1) mit einem biegeelastischen Schubschlauch (3) verbunden ist, der aus einer äußeren Hülle gebildet ist, in dessen Innerem elektrische Leitungen (9, 10, 11) angeordnet sind, wobei das Innere der Hülle mit gummielastischem, die elektrischen Leitungen (9, 10, 11) umgebenden Füllmaterial (12) ausgefüllt ist.

2. Sonde nach Anspruch 1, bei der die äußere Hülle des Schubschlauches (3) aus Polyamid und das Füllmaterial (12) aus Weich-Polyvinilchlorid besteht.

3. Sonde nach Anspruch 2, bei der die äußere Hülle durch Polyamid aus 11-Amino-Undecansäure (PA 11) gebildet ist.

4. Sonde nach Anspruch 2, bei der die äußere Hülle durch Polyamid aus Laurinlactam (PA 12) gebildet ist.

5. Sonde nach Anspruch 1, bei der die Enden (9a, 10a, 11a) der elektrischen Leitungen (9, 10, 11) des Schubschlauches (3) durch eine Aussparung des Prüfkopfes (1) hindurchgeführt und an der Stirnseite des Prüfkopfes (1) mit Leitungsenden des Prüfkopfes verbunden sind.

6. Sonde nach Anspruch 5, bei der der Prüfkopf (1) aus einem ringförmigen Spulenträger gebildet ist, der einen hülsenartigen Ansatz (1a) zum Einführen und Befestigen des Schubschlauches hat.

7. Sonde nach Anspruch 6, bei der der Spulenträger an der Stirnseite einen Ansatz (1b) zum Anbringen einer Kappe (2) hat.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 192 374 (WESTINGHOUSE) <br> * Zusammenfassung; Seite 7, Zeilen 19-37; Seite 11, Zeilen 12-18; Figur 3 * <br> --- | 1 | G 01 N 27/90 |
| A | EP-A-0 009 575 (KRAFTWERK UNION) <br> * Zusammenfassung * <br> --- | 1 | |
| A | EP-A-0 023 163 (COMPAGNIE GENERALE DE RADIOLOGIE) <br> * Zusammenfassung; Seite 5, Zeilen 7-16 * <br> --- | 1 | |
| A | GB-A-2 035 571 (NIHON DENSOKUKI CO.) <br> * Seite 2, Zeilen 4-14; Figur 2 * <br> --- | 1,2 | |
| A | FR-A-2 320 542 (C.E.A.) <br> * Seite 8, Zeilen 25-30,33 * <br> ----- | 1,2 | |

RECHERCHIERTE SACHGEBIETE (Int. Cl.5)

G 01 N

Der vorliegende Recherchenbericht wurde für alle Patentansprüche erstellt

| Recherchenort | Abschlußdatum der Recherche | Prüfer |
|---|---|---|
| DEN HAAG | 27-09-1989 | KOUZELIS D. |